# EUROPEAN PATENT APPLICATION

(11) **EP 4 375 112 A1**
(43) Date of publication of application: **29.05.2024**
(21) Application number: 22209767.7
(22) Date of filing: 28.11.2022
(51) Int. Cl.: B60L 1/00, B60L 58/16, B60L 1/08, B60L 58/26, H02J 7/14, H02J 7/00

(54) **METHOD AND SYSTEM FOR ENERGY DISTRIBUTION IN A VEHICLE**

(71) Applicant: VOLVO TRUCK CORPORATION, 405 08 Göteborg (SE)
(72) Inventor: SHARMA, Deepak, 146001 HOSHIARPUR (IN); BHANDARY, Dhiraj P, 576105 SANTHEKATTE - UDUPI (IN)
(74) Representative: Kransell & Wennborg KB

(57) **Abstract**

An energy distribution system (100) for an electric or hybrid vehicle (102), the system comprising: a battery (104) connected to a vehicle propulsion system (105) and to at least one auxiliary load (106a-c); a power distribution control unit (108) connected to the battery and configured to distribute power from the battery to the vehicle propulsion system and to the at least one auxiliary load, wherein the power distribution control unit is further configured to: receive a request for power from the vehicle propulsion system; determine that the state of health of the battery is below a predetermined first state of health threshold value; and control the energy distribution system to provide a power to the propulsion system lower than the requested power.

## Description

### TECHNICAL FIELD

The inventive concept relates generally to energy distribution in an electric or hybrid vehicle. In particular aspects, the inventive concept relates to prioritization of energy distribution based on the state of health of a battery in a vehicle comprising an electric or hybrid propulsion system. The inventive concept can be applied in heavy-duty vehicles, such as trucks, buses, and construction equipment. Although the inventive concept may be described with respect to a particular vehicle, the inventive concept is not restricted to any particular vehicle.

### BACKGROUND

In electric and hybrid vehicles energy from an energy storage such as a battery is limited and, in some situations, it is necessary to distribute the energy from the energy storage to different consumers based on priority of the respective consumer. How the energy is distributed can affect both performance of the vehicle and the user experience as well as properties of the energy storage as such. Accordingly, it is important to find advantageous distribution schemes for energy distribution in a vehicle.

### SUMMARY

According to a first aspect of the inventive concept, it is provided an energy distribution system for an electric or hybrid vehicle. The energy distribution system comprises: a battery connected to a vehicle propulsion system and to at least one auxiliary load; a power distribution control unit connected to the battery and configured to distribute power from the battery to the vehicle propulsion system and to the at least one auxiliary load. The power distribution control unit is further configured to: receive a request for power from the vehicle propulsion system; determine that the state of health of the battery is below a predetermined first state of health threshold value; and control the energy distribution system to provide a power to the propulsion system lower than the requested power.

The first aspect of the inventive concept may seek to improve the energy distribution in a vehicle based on the state-of-health of a battery in the vehicle by reducing the power provided to a propulsion system of a vehicle based on a reduced state-of-health of the battery. A technical benefit of the inventive concept may include an improved user experience since by reducing the power to the propulsion system, the power to other energy consumers can be maintained.

In some examples, the power distribution control unit is configured to control the energy distribution system to provide a power to the propulsion system corresponding to the requested power reduced by a first predetermined power reduction factor. A technical benefit may include that when the state-of-health of the battery is below a predetermined state-of-health threshold, the driver can reasonably expect that a requested propulsive power is not available, and by reducing the requested power by a predetermined power reduction power factor, a power can be provided to the propulsion system while maintaining the functionality of auxiliary power consumers, albeit a lower power than requested.

In some examples, the power distribution control unit is configured to: determine that the state of health of the battery is below a predetermined second state of health threshold value, the second state of health threshold value being lower than the first state of health threshold value; and control the energy distribution system to provide a power to the propulsion system corresponding to the requested power reduced by a second predetermined power reduction factor. A technical benefit may include that a tiered reduction of power makes it possible to provide power to auxiliary power consumers also for a lower state-of-health of the battery. Accordingly, at a first state-of-health threshold, the maximum power is reduced by a first power reduction factor and at a second state-of-health threshold, the maximum power is reduced by a second power reduction factor where the second power reduction factor incurs a greater reduction in power.

In some examples, the predetermined first state of health threshold value is in the range of 75% to 85%, and in further examples, the predetermined second state of health threshold value is in the range of 65% to 75%.

In some examples, the power distribution control unit is configured to control the energy distribution system to provide a power to an auxiliary load lower than a power requested by the auxiliary load. A technical benefit may include that more important auxiliary loads can be prioritized over more important auxiliary load.

In some examples, the power distribution control unit is configured to control the energy distribution system to provide a power to the propulsion system corresponding to 85% to 99% of the requested power. A technical benefit may include that the reduction of power is only as high as is required to provide a requested power to selected prioritized auxiliary loads.

In some examples, the energy distribution system further comprises a battery temperature sensor configured to determine a temperature of at least one battery cell in the battery and a battery cooling system arranged to cool the at least one battery cell. A technical benefit may include that energy can be provided to the cooling system if required.

In some examples, the power distribution control unit is configured to: determine that a temperature of a battery cell is above a predetermined battery temperature threshold value; and provide a requested power to the battery cooling system to reduce the temperature of the at least one battery cell to a temperature below the predetermined battery temperature threshold value. A technical benefit may include energy is distributed so that the battery is prevented from overheating even if the battery is at a reduced state-of-health.

In some examples, the at least one auxiliary load is selected from the group comprising: a vehicle safety system, a propulsion system thermal management system, an electric steering system, a cabin thermal management system, and a refrigeration system. A technical benefit may include that energy distribution can be prioritized based on the power requirements of the various auxiliary power consumers in the vehicle.

According to a second aspect of the inventive concept, it is provided a method for energy distribution in an electric or hybrid vehicle. The method comprises: receiving, by a power distribution control unit, a request for power from the vehicle propulsion system; determining, by the power distribution control unit, that the state of health of the battery is below a predetermined first state of health threshold value; and controlling, by the power distribution control unit, an energy distribution system to provide a power to the propulsion system lower than the requested power.

Features and technical benefits of the second aspect of the inventive concept are similar to those described above in relation to the first inventive concept.

In some examples, the method further comprises, by the power distribution control unit, controlling the energy distribution system to provide a power to the propulsion system corresponding to the requested power reduced by a first predetermined power reduction factor.

In some examples, the method further comprises, by the power distribution control unit, determining that the state of health of the battery is below a predetermined second state of health threshold value, the second state of health threshold value being lower than the first state of health threshold value; and controlling the energy distribution system to provide a power to the propulsion system corresponding to the requested power reduced by a second predetermined power reduction factor.

In some examples, the predetermined first state of health threshold value is in the range of 75% to 85% and the predetermined second state of health threshold value is in the range of 65% to 75%.

In some examples, the method further comprises, by the power distribution control unit, controlling the energy distribution system to provide a power to an auxiliary load lower than a power requested by the auxiliary load.

In some examples, the method further comprises, by the power distribution control unit, controlling the energy distribution system to provide a power to the propulsion system corresponding to 85% to 99% of the requested power.

There is also provided a computer program product comprising program code for performing, when executed by a processor device, the method of any one of the above examples, a control system comprising one or more control units configured to perform the method of any one of the above examples, and/or a non-transitory computer-readable storage medium comprising instructions, which when executed by the processor device, cause the processor device to perform the method of any one of the above examples.

The above aspects, accompanying claims, and/or examples disclosed herein above and later below may be suitably combined with each other as would be apparent to anyone of ordinary skill in the art.

Additional features and advantages are disclosed in the following description, claims, and drawings, and in part will be readily apparent therefrom to those skilled in the art or recognized by practicing the inventive concept as described herein. There are also disclosed herein control units, computer readable media, and computer program products associated with the above discussed technical benefits.

### BRIEF DESCRIPTION OF THE DRAWINGS

With reference to the appended drawings, below follows a more detailed description of aspects of the inventive concept cited as examples.
**FIG. 1** is a vehicle comprising an exemplary energy distribution system according to one example of the inventive concept.
**FIG. 2** is a block diagram schematically illustrating an energy distribution system according to one example of the inventive concept.
**FIG. 3** is a flow chart outlining a method for energy distribution in a vehicle according to one example of the inventive concept.
**FIG. 4** is a flow chart outlining a method for energy distribution in a vehicle according to one example of the inventive concept.
**FIG. 5** is a schematic diagram of an exemplary computer system for implementing examples disclosed herein, according to one example.

### DETAILED DESCRIPTION

Aspects set forth below represent the necessary information to enable those skilled in the art to practice the inventive concept.

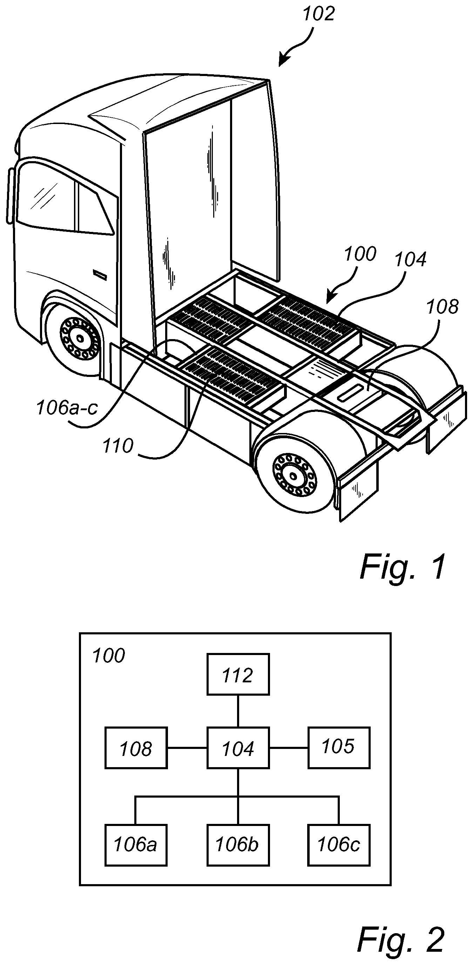

FIG. 1 is an electric or hybrid vehicle 102 comprising an exemplary energy distribution system 100 according to one example of the inventive concept. The energy distribution system 100 will be described with further reference to Fig. 2 schematically illustrating the energy distribution system 100.

The energy distribution system 100 comprises a battery 104 connected to a vehicle propulsion system 105 and to at least one auxiliary load 106a-c, a power distribution control unit 108 connected to the battery 104 and configured to distribute power from the battery 104 to the vehicle propulsion system 104 and to the at least one auxiliary load 106a-c. The power distribution control unit 108 is further configured to receive a request for power from the vehicle propulsion system 105; determine that the state of health of the battery 104 is below a predetermined first state of health threshold value; and control the energy distribution system 100 to provide a power to the propulsion system 105 lower than the requested power. Lower state-of-health of battery may have the effect that a requested propulsive power cannot be provided to the propulsion system. To avoid having to reduce power to important components in the vehicle such as safety systems, steering and the like, the power provided to the propulsion system can be reduced to be able to provide the required power to auxiliary power consumers.

The power distribution control unit 108 can be configured to control the energy distribution system 100 to provide a power to the propulsion system 105 corresponding to the requested power reduced by a first predetermined power reduction factor. The first predetermined power reduction factor may for example be in the range of 80% to 99%, and the first predetermined power reduction factor can be determined based on the state-of-health of the battery.

The power distribution control unit 108 can be further configured to determine that the state of health of the battery 104 is below a predetermined second state of health threshold value, the second state-of-health threshold value being lower than the first state of health threshold value, and to control the energy distribution system 100 to provide a power to the propulsion system 105 corresponding to the requested power reduced by a second predetermined power reduction factor. The second predetermined power reduction factor is lower than the first predetermined power reduction factor so that if the state-of-health of the battery is below the second state-of-health threshold value, the reduction in power is greater compared to if the state-of-health is between the first state-of-health threshold value and the second state-of-health threshold value. The second power reduction factor can be in the range of 80% to 99%.

The reduction of power can be a reduction of peak power and/or of a continuous power provided to the propulsion system. Moreover, the power distribution control unit can be configured to control the energy distribution system to provide a power to the propulsion system corresponding to 85% to 99% of the requested power. In some examples, the power reduction is limited so that a power provided to the propulsion system is at least 85%.

In an example, the predetermined first state of health threshold value is in the range of 75% to 85% and the predetermined second state of health threshold value is in the range of 65% to 75%.

The power distribution control unit may be further configured to control the energy distribution system to provide a power to an auxiliary load 106a-c lower than a power requested by the auxiliary load 106a-c. The at least one auxiliary load 106a-c may be selected from the group comprising: a vehicle safety system, a propulsion system thermal management system, an electric steering system, a cabin thermal management system, and a refrigeration system.

The energy distribution system 100 may further comprise a battery temperature sensor 112 configured to determine a temperature of at least one battery cell 110 in the battery and a battery cooling system arranged to cool the at least one battery cell 100. The energy distribution system 100 may then be configured to determine that a temperature of a battery cell 110 is above a predetermined battery temperature threshold value; and provide a requested power to the battery cooling system to reduce the temperature of the at least one battery cell 100 to a temperature below the predetermined battery temperature threshold value. Accordingly, energy distribution to a battery cooling system can be based on the cell temperature. For instance, if a cell temperature is above 35°C, the battery cooling system requires energy to cool down the battery cells to avoid risking that the battery cell is momentarily de-energized.

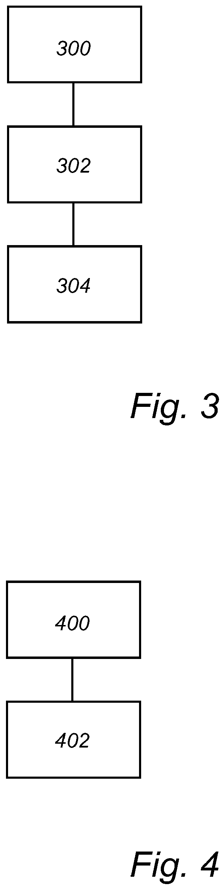

FIG. 3 is a flow chart outlining a method for energy distribution in a vehicle according to one example of the inventive concept. The illustrated method comprises receiving 300, by the power distribution control unit 108, a request for power from the vehicle propulsion system 105; determining 302, by the power distribution control unit 108, that the state of health of the battery 104 is below a predetermined first state of health threshold value; and controlling 304, by the power distribution control unit 108, the energy distribution system 100 to provide a power to the propulsion system 105 lower than the requested power.

FIG. 4 is a flow chart outlining a method for energy distribution in a vehicle according to one example of the inventive concept. The illustrated method comprises determining 400 that the state of health of the battery 104 is below a predetermined second state of health threshold value, the second state of health threshold value being lower than the first state of health threshold value; and controlling 402 the energy distribution system 100 to provide a power to the propulsion system 105 corresponding to the requested power reduced by a second predetermined power reduction factor.

In situations when the battery state-of-health is above the predetermined first state of health threshold value, for example if battery state-of-health is in the range of 85% to 100%, full functionality and performance of the vehicle can be expected. Accordingly, there should not be any compromise with respect to the vehicle acceleration. Power distribution to auxiliary loads can be prioritized based on the criticality of the auxiliary load. For example, auxiliary loads such as a refrigerated trailer can have a lower priority compared to safety critical systems.

In situations when the state-of-health of the battery 104 is below the predetermined first state of health threshold value, such as when the battery state-of-health is in the range of 75% to 85%, the battery 104 can be seen as having crossed its initial useful life and a driver/user can expect a reduced performance. Accordingly, for example during acceleration the power provided to the propulsion system 105 can be reduced by 10% to 15% compared to a battery with full state-of-health. The reduction of maximum power from the battery may help to extend the battery life.

Moreover, the prioritization of auxiliary loads 106a-c can be performed according to the following order:
P1: Vehicle safety systems
P2: Powertrain thermal management
P3: Electric steering, ePTO (electric power take-off) / trailer
P4: Driver cabin heating / cooling
P5: Any other electric loads (other than vehicle safety)

Based on the above prioritization, auxiliary loads categorized under P1 has the highest priority and auxiliary loads categorized under P5 has the lowest priority. It should be noted that other auxiliaries may be included and that the order of priority may be changed while still adhering to the inventive concept described herein.

In situations when the state-of-health of the battery 104 is below the predetermined second state of health threshold value, such as when the battery state-of-health is below 75%, the battery is aged, and a driver/user can expect reduced performance from the vehicle.

The situation when the state-of-health is above the predetermined first state of health threshold value can be seen as a power-mode where energy distribution for vehicle propulsion and for other electric auxiliary loads is regulated based on the energy demand.

The situation when the state-of-health is below the predetermined first state of health threshold value can be seen as an eco-mode where vehicle acceleration can be reduced

In an example, the battery can provide a power of 75kW at the current operating point. If a total requested power from the propulsion system is 70kW, a requested power from a cabin cooling system is 9kW, and the required power for other auxiliary loads is 5 kW, the total requested power is 70kW + 9kW + 5kW = 84 kW. In this case, the 9 kW and 5 kW will be provided fully to the auxiliary load and the propulsion power is reduced by 9kW to 61 kW so that the total provided power matches the battery capability. Hence, the reduction in power provided to the propulsion system does not have to be fixed, it may depend on requirements from auxiliary loads.

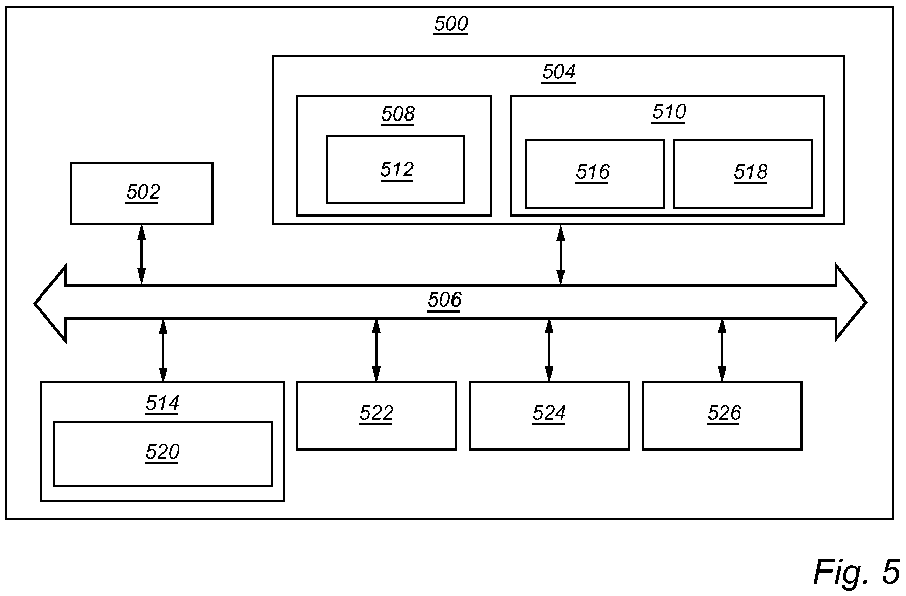

FIG. 5 is a schematic diagram of a computer system 500 for implementing examples disclosed herein. The computer system can be seen as representing the functionality of the power distribution control unit 108. The computer system 500 is adapted to execute instructions from a computer-readable medium to perform these and/or any of the functions or processing described herein. The computer system 500 may be connected (e.g., networked) to other machines in a LAN, an intranet, an extranet, or the Internet. While only a single device is illustrated, the computer system 500 may include any collection of devices that individually or jointly execute a set (or multiple sets) of instructions to perform any one or more of the methodologies discussed herein. Accordingly, any reference in the disclosure and/or claims to a computer system, computing system, computer device, computing device, control system, control unit, electronic control unit (ECU), processor device, etc., includes reference to one or more such devices to individually or jointly execute a set (or multiple sets) of instructions to perform any one or more of the methodologies discussed herein. For example, control system may include a single control unit or a plurality of control units connected or otherwise communicatively coupled to each other, such that any performed function may be distributed between the control units as desired. Further, such devices may communicate with each other or other devices by various system architectures, such as directly or via a Controller Area Network (CAN) bus, etc.

The computer system 500 may comprise at least one computing device or electronic device capable of including firmware, hardware, and/or executing software instructions to implement the functionality described herein. The computer system 500 may include a processor device 502 (may also be referred to as a control unit), a memory 504, and a system bus 506. The computer system 500 may include at least one computing device having the processor device 502. The system bus 506 provides an interface for system components including, but not limited to, the memory 504 and the processor device 502. The processor device 502 may include any number of hardware components for conducting data or signal processing or for executing computer code stored in memory 504. The processor device 502 (e.g., control unit) may, for example, include a general-purpose processor, an application specific processor, a Digital Signal Processor (DSP), an Application Specific Integrated Circuit (ASIC), a Field Programmable Gate Array (FPGA), a circuit containing processing components, a group of distributed processing components, a group of distributed computers configured for processing, or other programmable logic device, discrete gate or transistor logic, discrete hardware components, or any combination thereof designed to perform the functions described herein. The processor device may further include computer executable code that controls operation of the programmable device.

The system bus 506 may be any of several types of bus structures that may further interconnect to a memory bus (with or without a memory controller), a peripheral bus, and/or a local bus using any of a variety of bus architectures. The memory 504 may be one or more devices for storing data and/or computer code for completing or facilitating methods described herein. The memory 504 may include database components, object code components, script components, or other types of information structure for supporting the various activities herein. Any distributed or local memory device may be utilized with the systems and methods of this description. The memory 504 may be communicably connected to the processor device 502 (e.g., via a circuit or any other wired, wireless, or network connection) and may include computer code for executing one or more processes described herein. The memory 504 may include non-volatile memory 508 (e.g., read-only memory (ROM), erasable programmable read-only memory (EPROM), electrically erasable programmable read-only memory (EEPROM), etc.), and volatile memory 510 (e.g., random-access memory (RAM)), or any other medium which can be used to carry or store desired program code in the form of machine-executable instructions or data structures and which can be accessed by a computer or other machine with a processor device 502. A basic input/output system (BIOS) 512 may be stored in the non-volatile memory 508 and can include the basic routines that help to transfer information between elements within the computer system 500.

The computer system 500 may further include or be coupled to a non-transitory computer-readable storage medium such as the storage device 514, which may comprise, for example, an internal or external hard disk drive (HDD) (e.g., enhanced integrated drive electronics (EIDE) or serial advanced technology attachment (SATA)), HDD (e.g., EIDE or SATA) for storage, flash memory, or the like. The storage device 514 and other drives associated with computer-readable media and computer-usable media may provide non-volatile storage of data, data structures, computer-executable instructions, and the like.

A number of modules can be implemented as software and/or hard-coded in circuitry to implement the functionality described herein in whole or in part. The modules may be stored in the storage device 514 and/or in the volatile memory 510, which may include an operating system 516 and/or one or more program modules 518. All or a portion of the examples disclosed herein may be implemented as a computer program product 520 stored on a transitory or non-transitory computer-usable or computer-readable storage medium (e.g., single medium or multiple media), such as the storage device 514, which includes complex programming instructions (e.g., complex computer-readable program code) to cause the processor device 502 to carry out the steps described herein. Thus, the computer-readable program code can comprise software instructions for implementing the functionality of the examples described herein when executed by the processor device 502. The processor device 502 may serve as a controller or control system for the computer system 500 that is to implement the functionality described herein.

The computer system 500 also may include an input device interface 522 (e.g., input device interface and/or output device interface). The input device interface 522 may be configured to receive input and selections to be communicated to the computer system 500 when executing instructions, such as from a keyboard, mouse, touch-sensitive surface, etc. Such input devices may be connected to the processor device 502 through the input device interface 522 coupled to the system bus 506 but can be connected through other interfaces such as a parallel port, an Institute of Electrical and Electronic Engineers (IEEE) 1394 serial port, a Universal Serial Bus (USB) port, an IR interface, and the like. The computer system 500 may include an output device interface 524 configured to forward output, such as to a display, a video display unit (e.g., a liquid crystal display (LCD) or a cathode ray tube (CRT)). The computer system 500 may also include a communications interface 526 suitable for communicating with a network as appropriate or desired.

The operational steps described in any of the exemplary aspects herein are described to provide examples and discussion. The steps may be performed by hardware components, may be embodied in machine-executable instructions to cause a processor to perform the steps, or may be performed by a combination of hardware and software. Although a specific order of method steps may be shown or described, the order of the steps may differ. In addition, two or more steps may be performed concurrently or with partial concurrence.

The terminology used herein is for the purpose of describing particular aspects only and is not intended to be limiting of the inventive concept. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, steps, operations, elements, and/or components, but do not preclude the presence or addition of one or more other features, integers, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present inventive concept.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this inventive concept belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present inventive concept is not limited to the aspects described above and illustrated in the drawings; rather, the skilled person will recognize that many changes and modifications may be made within the scope of the present inventive concept and appended claims. In the drawings and specification, there have been disclosed aspects for purposes of illustration only and not for purposes of limitation, the scope of the inventive concepts being set forth in the following claims.

## Claims

1. An energy distribution system (100) for an electric or hybrid vehicle (102), the energy distribution system comprising:
a battery (104) connected to a vehicle propulsion system (105) and to at least one auxiliary load (106a-c);
a power distribution control unit (108) connected to the battery and configured to distribute power from the battery to the vehicle propulsion system and to the at least one auxiliary load, the power distribution control unit being further configured to:
receive a request for power from the vehicle propulsion system;
determine that the state of health of the battery is below a predetermined first state of health threshold value; and
control the energy distribution system to provide a power to the propulsion system lower than the requested power.

2. The energy distribution system according to claim 1, wherein the power distribution control unit is configured to control the energy distribution system to provide a power to the propulsion system corresponding to the requested power reduced by a first predetermined power reduction factor.

3. The energy distribution system according to claim 1, wherein the power distribution control unit is configured to:
determine that the state of health of the battery is below a predetermined second state of health threshold value, the second state of health threshold value being lower than the first state of health threshold value; and
control the energy distribution system to provide a power to the propulsion system corresponding to the requested power reduced by a second predetermined power reduction factor.

4. The energy distribution system according to claim 3, wherein the predetermined second state of health threshold value is in the range of 65% to 75% and wherein the predetermined first state of health threshold value is in the range of 75% to 85%.

5. The energy distribution system according to any one of the preceding claims, wherein the power distribution control unit is configured to control the energy distribution system to provide a power to the propulsion system corresponding to 85% to 99% of the requested power.

6. The energy distribution system according to any one of the preceding claims, further comprising a battery temperature sensor (112) configured to determine a temperature of at least one battery cell (110) in the battery and a battery cooling system arranged to cool the at least one battery cell.

7. The energy distribution system according to claim 6, wherein the power distribution control unit is configured to:
determine that a temperature of a battery cell is above a predetermined battery temperature threshold value; and
provide a requested power to the battery cooling system to reduce the temperature of the at least one battery cell to a temperature below the predetermined battery temperature threshold value.

8. A vehicle (102) comprising the energy distribution system according to any one of claims 1 to 7.

9. Method for energy distribution in an electric or hybrid vehicle (102), the method comprising:
receiving (300), by a power distribution control unit (108), a request for power from the vehicle propulsion system (105);
determining (302), by the power distribution control unit, that the state of health of the battery is below a predetermined first state of health threshold value; and
controlling (304), by the power distribution control unit, an energy distribution system (100) to provide a power to the propulsion system lower than the requested power.

10. The method according to claim 9, further comprising, by the power distribution control unit, controlling the energy distribution system to provide a power to the propulsion system corresponding to the requested power reduced by a first predetermined power reduction factor.

11. The method according to claim 10, further comprising, by the power distribution control unit,
determining (400) that the state of health of the battery is below a predetermined second state of health threshold value, the second state of health threshold value being lower than the first state of health threshold value; and
controlling (402) the energy distribution system to provide a power to the propulsion system corresponding to the requested power reduced by a second predetermined power reduction factor.

12. The method according to any one of claims 9 to 11, wherein the predetermined first state of health threshold value is in the range of 75% to 85% and the predetermined second state of health threshold value is in the range of 65% to 75%.

13. A computer program product comprising program code for performing, when executed by the processor device, the method of any one of claims 9 to 12.

14. A control system comprising one or more control units configured to perform the method of any one of claims 9 to 12.

15. A non-transitory computer-readable storage medium comprising instructions, which when executed by the processor device, cause the processor device to perform the method of any one of claims 9 to 12.
